# EUROPÄISCHE PATENTANMELDUNG

(11) **EP 4 400 349 A1**
(43) Veröffentlichungstag der Anmeldung: **17.07.2024**
(21) Anmeldenummer: 24150139.4
(22) Anmeldetag: 03.01.2024
(51) Int. Cl.: B60K 26/02, B60K 26/04

(54) **FAHRPEDAL FÜR EIN KRAFTFAHRZEUG, VERFAHREN ZUM BETREIBEN EINES FAHRPEDALS FÜR EIN KRAFTFAHRZEUG, KRAFTFAHRZEUG**

(30) Priorität: 09.01.2023 DE 102023100323; 27.03.2023 DE 102023107615
(71) Anmelder: HELLA GmbH & Co. KGaA, 59552 Lippstadt (DE)
(72) Erfinder: BERHORST, Jann, 33178 Borchen (DE); KUHLMANN, Sascha, 59590 Geseke (DE); MAßMANN, Clemens, 59555 Lippstadt (DE)
(74) Vertreter: Behr-Wenning, Gregor

(57) **Zusammenfassung**

Es wird ein Fahrpedal (100) für ein Kraftfahrzeug vorgeschlagen. Das Fahrpedal weist eine Grundplatte (12), welche an der Karosserie des Kraftfahrzeugs anbringbar ist, eine Pedalplatte (10), welche dazu konfiguriert ist, eine mechanische Kraft von einem Fahrer aufzunehmen und welche relativ zur Grundplatte (12) schwenkbar ist, und zumindest ein Scharnier (16), worüber die Grundplatte (12) und die Pedalplatte (10) schwenkend miteinander gekoppelt sind, auf. Zudem weist das Fahrpedal (100) eine Federeinheit (14), welche mit der Pedalplatte (10) gekoppelt ist und sich parallel oder im Wesentlichen parallel zur Pedalplatte (10) erstreckt, und eine mit der Federeinheit (14) gekoppelte Hebeleinheit (18), aufweisend einen Hebelarm (19) und einen Sensor (17), auf. Die mechanische Kraft ist über die Federeinheit (14) und den Hebelarm (19) der Hebeleinheit (18) an den Sensor (17) der Hebeleinheit (18) übertragbar. Der Sensor (17) ist dazu ausgeführt, die mechanische Kraft in elektrische Kraft umzuwandeln.

## Beschreibung

Die Erfindung betrifft allgemein das Gebiet der Kraftfahrzeuge im Bereich Agrikultur und Konstruktion. Im Speziellen betrifft die Erfindung ein Fahrpedal für ein Kraftfahrzeug, ein Verfahren zum Betreiben eines Fahrpedals für ein Kraftfahrzeug sowie ein Kraftfahrzeug.

Fahrpedale, wie etwa Gaspedale, haben hohe Anforderungen an Zuverlässigkeit. Denn ein Fahrpedal stellt im Grunde genommen die Verbindung zwischen dem Menschen und der Maschine, bzw. dem Kraftfahrzeug, dar. Ein Fahrpedal muss präzise betätigt werden können, zuverlässig ein Signal, insbesondere ein Steuersignal, übertragen können und wenig fehleranfällig sein.

Diese Anforderungen sind gerade im Bereich der Agrikultur und Konstruktion schwer erfüllbar. In diesen Bereichen kann die Fahrerkabine stark verschmutzt und/oder verstaubt sein. Dadurch ist die gesamte Mechanik bekannter Fahrpedale oft Schmutz und Staub ausgesetzt. Es kann zudem vorkommen, dass zusätzlich auch Kieselsteine und/oder Steine sich bis hin zum Fahrpedal durchdrängen können.

Es ist daher Aufgabe der vorliegenden Erfindung, die voranstehenden beschriebenen Anforderungen in vorteilhafter Weise zu erfüllen. Insbesondere ist es Aufgabe der vorliegenden Erfindung die Robustheit und die Zuverlässigkeit des Fahrpedals zu erhöhen. Eine weitere Aufgabe der vorliegenden Erfindung kann darin gesehen werden ein Fahrpedal bereitzustellen, welches im Vergleich mit bekannten Fahrpedalen weniger anfällig für Verschmutzungen ist.

Die voranstehende Aufgabe wird gelöst durch ein Fahrpedal mit den Merkmalen des Anspruchs 1, durch ein Verfahren zum Betreiben eines Fahrpedals mit den Merkmalen des Anspruchs 10 sowie durch ein Kraftfahrzeug mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Fahrpedal beschrieben sind, selbstverständlich auch im Zusammenhang mit dem erfindungsgemäßen Kraftfahrzeug und/oder dem Verfahren und jeweils umgekehrt, sodass bezüglich der Offenbarung zu den einzelnen Erfindungsaspekten stets wechselseitig Bezug genommen wird bzw. werden kann.

Mit Ausführungsformen der Erfindung kann in vorteilhafter Weise ein verbessertes, robustes und zuverlässiges Fahrpedal bereitgestellt werden. Ein solches Fahrpedal ist weniger Fehler anfällig, insbesondere weniger anfällig für Verschmutzungen.

Ein Aspekt der vorliegenden Offenbarung betrifft ein Fahrpedal für ein Kraftfahrzeug. Das Fahrpedal weist eine Grundplatte, welche an der Karosserie des Kraftfahrzeugs anbringbar ist, eine Pedalplatte, welche dazu konfiguriert ist, eine mechanische Kraft von einem Fahrer aufzunehmen und welche relativ zur Grundplatte schwenkbar ist, auf. Das Fahrpedal weist weiter zumindest ein Scharnier, worüber die Grundplatte und die Pedalplatte schwenkend miteinander gekoppelt sind, eine Federeinheit, welche mit der Pedalplatte gekoppelt ist und sich parallel oder im Wesentlichen parallel zur Pedalplatte erstreckt, und eine mit der Federeinheit gekoppelte Hebeleinheit auf. Die Hebeleinheit weist wiederum einen Hebelarm und einen Sensor auf. Die mechanische Kraft ist dabei über die Federeinheit und den Hebelarm der Hebeleinheit an den Sensor der Hebeleinheit übertragbar. Der Sensor ist dazu ausgeführt, die mechanische Kraft in elektrische Kraft umzuwandeln.

Mit anderen Worten kann ein Fahrpedal vorgeschlagen werden, dessen wichtige mechanischen Bauteile, d. h., die Federeinheit, im Gegensatz zu bekannten Fahrpedalen unter der Pedalplatte und nicht an der Grundplatte angeordnet sind.

Dadurch kann die Federeinheit, welche grundsätzlich alle wichtigen mechanischen Bauteile aufweist, weniger anfällig für Verschmutzungen sein.

Beim Fahrpedal kann es sich um ein Gaspedal, ein Bremspedal oder um ein Steuerpedal handeln. Mittels eines solchen Fahrpedal kann grundsätzlich eine Funktion des Kraftfahrzeugs mit einer mechanischen Kraft des Fahrers des Kraftfahrzeugs gesteuert werden. Beim Kraftfahrzeug kann es sich um jegliche Art von Kraftfahrzeug handeln. Vorzugsweise handelt es sich um ein Kraftfahrzeug, welches üblicherweise in der Agrikultur oder in der Konstruktion zum Einsatz kommt.

Das vorgeschlagene Fahrpedal kann aus zwei zueinander schwenkbar angeordneten Einheiten bestehen. Einerseits kann die Pedalplatte, welche mit der Federeinheit gekoppelt ist, eine erste Einheit darstellen und anderseits kann die Grundplatte, welche vorzugsweise mit der Hebeleinheit gekoppelt ist, eine zweite Einheit darstellen. Die Pedalplatte und die Grundplatte sind vorzugsweise über ein oder mehrere Scharniere schwenkend miteinander gekoppelt. Die Federeinheit und die Hebeleinheit können über den Hebelarm der Hebeleinheit beweglich miteinander gekoppelt sein. Die Hebeleinheiten und die Federeinheit können derart miteinander verbunden, bzw. wirkverbunden sein, dass die mechanische Kraft von der Pedalplatte an den Sensor übertragbar ist. Eine Schwenkung der Pedalplatte kann demnach eine Bewegung der Federeinheit verursachen, welche wiederum eine Bewegung des Hebelarms verursachen kann. Der Sensor der Hebeleinheit kann infolgedessen die Bewegung, welche vorzugsweise eine Schwenkung ist, des Hebelarms erfassen.

Die Pedalplatte des Fahrpedals weist vorzugsweise eine Längserstreckung auf, welche, wie bei den bekannten Fahrpedalen, die Längserstreckung eines Fußes des Fahrers entsprechen kann. Die Federeinheit kann sich demnach parallel oder im Wesentlichen Parallel zur Längserstreckung der Pedalplatte erstrecken. Die Federeinheit kann somit mit einem gewissen Winkel über die Grundplatte angeordnet sein, wobei die Schwenkung der Federeinheit relativ zur Grundplatte mit der Schwenkung der Pedalplatte relativ zur Grundplatte übereinstimmt.

Dadurch kann ein robustes, kostengünstiges Fahrpedal bereitgestellt werden, welches zudem wenig Fehleranfällig wegen Verschmutzung, Kies und/oder Staub ist.

Gemäß einer Ausführungsform des Fahrpedals weist die Pedalplatte eine Koppeleinheit und/oder eine Einstellvorrichtung auf. Die Koppeleinheit und/oder die Einstellvorrichtung sind/ist dazu eingerichtet die Federeinheit mit der Pedalplatte zu koppeln, insbesondere beweglich zu befestigen.

Bei der Koppeleinheit und/oder bei der Einstellvorrichtung kann es sich um Biegeteile handeln. Ein Teil der Pedalplatte kann zur Bildung der Koppeleinheit und/oder der Einstellvorrichtung gebogen sein. Die Koppeleinheit kann einen Ausschnitt in der Pedalplatte sein, welcher hin zur Grundplatte, vorzugweise mit einem 90° Winkel zur Pedalplatte gebogen worden ist. Die Koppeleinheit kann demnach durch das Biegen eine Öffnung in der Pedalplatte bilden. Die Koppeleinheit weist vorzugsweise selber eine Öffnung und/oder eine Bohrung auf, wodurch die Federeinheit durchführen kann. Insbesondere kann eine Führungsstange der Federeinheit durch die Öffnung der Koppeleinheit geführt sein. Die Öffnung der Koppeleinheit kann derart ausgebildet sein, dass die Federeinheit beweglich in der Öffnung führbar ist.

Die Einstellvorrichtung kann zwei Ausschnitte in der Pedalplatte sein. Die zwei Ausschnitte zur Bildung der Einstellvorrichtung können relativ zur Längsachse der Pedalplatte, d. h., zur Achse parallel zur Längserstreckung der Pedalplatte, symmetrisch angeordnet sein. Die zwei Ausschnitte können hin zur Längsachse der Pedalplatte zur Rückseite der Pedalplatte gebogen sein. Der Biegewinkel der Einstellvorrichtung ist vorzugsweise perpendikular zum Biegewinkel der Koppeleinheit. Die Einstellvorrichtung weist zudem vorzugsweise eine Öffnung, insbesondere eine Öffnung pro Abschnitt. Die Öffnung kann mit einem definierten Abstand zur Rückseite der Pedalplatte angeordnet sein. Die Rückseite der Pedalplatte bezeichnet die Seite, welche hin zur Grundplatte, bzw. zur Karosserie des Kraftfahrzeugs gerichtet ist. Die Vorderseite der Pedalplatte bezeichnet die Seite, welche von dem Fuß des Fahrers indirekt oder direkt berührt wird.

Gemäß einer Ausführungsform des Fahrpedals weist die Federeinheit zumindest ein Federpaket auf, wobei das zumindest eine Federpaket zur Aufnahme der mechanischen Kraft an einer/der Koppelvorrichtung der Pedalplatte komprimierbar ist. Das Federpaket kann um eine Führungsstange herumgewickelt sein. Das Federpaket kann zwischen einer Koppeleinheit und einem Federteller angeordnet sein. Der Federteller ist dabei vorzugsweise am freien Ende der Federeinheit, d. h., beim freien Ende der Pedalplatte, angeordnet.

Gemäß einer Ausführungsform des Fahrpedals weist die Federeinheit ein Gelenkstück auf, welches dazu eingerichtet ist die Federeinheit mit der Hebeleinheit zu koppeln, insbesondere den Hebelarm der Hebeleinheit mittels eines Einstellstifts der Federeinheit aufzunehmen. Das Gelenkstück kann zur Aufnahme des Hebelarms der Hebeleinheit eine Spalte aufweisen. Das Gelenkstück kann weiter zur Aufnahme eines Einstellstifts eine quer zur Aufnahme gerichtete Bohrung aufweisen. Der Einstellstift kann sich durch die Bohrungen des Gelenkstücks sowie durch den Hebelarm erstrecken. Die Erstreckung des Einstellstifts kann im Wesentlichen senkrecht zur Erstreckung des Hebelarms ausgerichtet sein.

Dadurch kann in vorteilhafter Weise eine Wirkkopplung des Gelenkstücks, d. h., der Federeinheit, mit dem Hebelarm, d. h., mit der Hebeleinheit, erzielt werden. Insgesamt ist es vorteilhaft, wenn die Öffnung des Gelenkstücks formschlüssig mit einem Endstück des Hebelarms ausgebildet ist, denn dadurch kann die mechanische Kraft mit weniger Verlust übertragt werden. Die Bohrung des Gelenkstücks weist vorzugsweise den gleichen Durchmesser wie der Außendurchmesser des Einstellstifts auf.

Gemäß einer Ausführungsform des Fahrpedals weist das Gelenkstück der Federeinheit eine Reibfläche auf, welche im Kontakt mit einer Rückseite der Pedalplatte steht. Hierfür kann die Rückseite der Pedalplatte eine Gegenreibfläche aufweisen. Durch die Reibfläche des Gelenkstücks kann eine Reibkraft an die Pedalplatte übertragen werden. Durch ein solches Fahrpedal kann ein Hysterese-Effekt erzeugt werden. Das Fahrpedal kann daher in einer Sollposition, bzw. Sollstellung, ohne großen Kraftaufwand gehalten werden.

Insbesondere kann ein Hysterese-Effekt erzeugt werden, wenn keine mechanische Kraft mehr von der Pedalplatte aufgenommen wird und der Schwenkwinkel der Pedalplatte sich vergrößert, bzw. vergrößern soll. Das Gelenkstück kann formschlüssig mit der Rückseite der Pedalplatte, insbesondere mit der Gegenreibfläche der Pedalplatte ausgebildet sein.

Über die Einstellvorrichtung kann die Reibfläche des Gelenkstücks und/oder die Gegenreibfläche der Rückseite der Pedalplatte bestimmt und/oder eingestellt werden. Die Einstellvorrichtung kann derart angeordnet sein, dass der Abstand zwischen der Rückseite der Pedalplatte und dem Gelenkstück der Federeinheit fest definiert oder eingestellt werden kann. Bei einer Schwenkung der Pedalplatte kann das Gelenkstück entlang seiner Reibfläche gerieben werden. Die Einstellvorrichtung kann das Gelenkstück entlang der Reibfläche mittels dem Einstellstift führen. Hierfür kann es vorgesehen werden, dass der Einstellstift in einer Führungsschlitze der Einstellvorrichtung angeordnet, insbesondere beweglich angeordnet ist.

Gemäß einer Ausführungsform des Fahrpedals umfasst die Pedalplatte und/oder die Grundplatte Blech, insbesondere ist es aus Blech gefertigt.

Dadurch kann die Robustheit des Fahrpedals weiter erhöht werden.

Gemäß einer Ausführungsform des Fahrpedals ist der Hebelarm der Hebeleinheit gebogen und unter Ausbildung eines variablen Einstellwinkels mit dem Sensor der Hebeleinheit gekoppelt. Dadurch kann die Übertragung der mechanischen Kraft mittels des Hebelarms präziser durchgeführt werden. Dadurch kann sich insbesondere der Schwenkwinkel der Pedalplatte besser in einem Einstellwinkel des Hebelarms zum Sensors übersetzen lassen. Der Hebelarm kann um einen Winkel von 40°, von 30° oder von 20° gebogen sein. Die Biegung des Hebelarms ist vorzugsweise fest definiert. Der Hebelarm ist vorzugsweise einteilig ausgebildet.

Gemäß einer Ausführungsform des Fahrpedals ist der Sensor der Hebeleinheit ein Drehwinkelsensor, welcher dazu eingerichtet ist einen/den Einstellwinkel des Hebelarms der Hebeleinheit zu ermitteln. Der Einstellwinkel des Hebelarms korreliert insbesondere mit der mechanischen Kraft und/oder mit einem Schwenkwinkel der Pedalplatte. Mit anderen Worten hängt vorzugsweise der Einstellwinkel mit dem Schwenkwinkel der Pedalplatte zusammen. Das Verhältnis des Einstellwinkels des Hebelarms mit dem Schwenkwinkel der Pedalplatte kann von der Biegung des Hebelarms abhängen.

Gemäß einer Ausführungsform des Fahrpedals ist ein Pedalschutz vorgesehen, welcher dazu eingerichtet ist, zumindest eine Vorderseite der Pedalplatte zu bedecken. Der Pedalschutz kann einteilig ausgebildet sein. Der Pedalschutz kann wechselbar mit der Pedalplatte verbindbar ausgebildet sein. Der Pedalschutz kann alternativ oder zusätzlich aus Kunststoff ausgebildet sein oder Kunststoff aufweisen.

Ein zweiter Aspekt der vorliegenden Offenbarung betrifft ein Verfahren zum Betreiben eines Fahrpedals für ein Kraftfahrzeug wie voranstehend und nachfolgend beschrieben. Das Verfahren weist folgende Schritte auf:
- Aufnehmen einer mechanischen Kraft mittels der Pedalplatte über eine Schwenkung der Pedalplatte relativ zur Grundplatte, und
- Übertragen der mechanischen Kraft über die Federeinheit und den Hebelarm der Hebeleinheit an den Sensor der Hebeleinheit. Die übertragene mechanische Kraft wird in mittels des Sensors elektrische Kraft umgewandelt.

Sämtliche Vorteile, welche in Bezug zum ersten Aspekt der vorliegenden Offenbarung erläutert worden sind, gelten gelichermaßen für das Verfahren zum Betreiben eines Fahrpedals gemäß dem zweiten Aspekt der vorliegenden Offenbarung.

Gemäß einer Ausführungsform des Verfahrens wird zum Übertragen der mechanischen Kraft an den Sensor ein Federpaket der Federeinheit durch die Schwenkung der Pedalplatte relativ zur Grundplatte komprimiert und eine zu einer Längserstreckung der Pedalplatte parallelverlaufende oder im Wesentlichen parallelverlaufende Bewegung eines Gelenkstückes der Federeinheit wird durch das Komprimieren verursacht.

Mit anderen Worten kann das Gelenkstück durch eine Schwenkung der Pedalplatte, welche eine Komprimierung des Federpakets verursacht, sich parallel oder im Wesentlichen parallel zur Längserstreckung der Federeinheit und/oder der Pedalplatte hin oder her (abhängig davon ob der Schwenkwinkel verkleinert oder vergrößert wird) bewegen. Bei der Bewegung des Gelenkstücks steht das Gelenkstück vorzugsweise durchgehen im Kontakt mit der Rückseite der Pedalplatte. Das Federpaket kann sich dabei zwischen einer Koppeleinheit und einem Federteller komprimieren lassen.

Gemäß einer Ausführungsform des Verfahrens wird zum Übertragen der mechanischen Kraft an den Sensor die zu der Längserstreckung der Pedalplatte parallelverlaufende oder im Wesentlichen parallelverlaufende Bewegung des Gelenkstückes eine Schwenkung des Hebelarms der Hebeleinheit relativ zum Sensor der Hebeleinheit impliziert. Zudem wird der entsprechende Schwenkwinkel der Schwenkung des Hebelarms mittels des Sensors ermittelt. Beim Sensor kann es sich demnach um einen Drehwinkelsensor handeln.

Dadurch kann in vorteilhafter Weise die mechanische Kraft in elektrischer Kraft umgewandelt werden.

Gemäß einer Ausführungsform des Verfahrens wird beim Aufnehmen der mechanischen Kraft mittels der Pedalplatte ein Gelenkstück der Federeinheit an der Pedalplatte, insbesondere an einer Rückseite der Pedalplatte, derart gerieben, dass das Gelenkstück eine Gegenkraft gegen das Entspannen des Federpakets der Federeinheit bewirkt.

Ein zweiter Aspekt der vorliegenden Offenbarung betrifft ein Kraftfahrzeug, insbesondere für den Agrikulturbereich und/oder Konstruktionsbereich, aufweisend ein Fahrpedal, wie voranstehend und nachfolgend beschrieben.

Sämtliche Offenbarungen, welche voranstehend und nachfolgend in Bezug auf einen Aspekt der vorliegenden Offenbarung beschrieben sind, gelten gleichermaßen für alle weiteren Aspekte der vorliegenden Offenbarung.

Anhand der beigefügten Zeichnungen wird die Erfindung nachfolgend näher erläutert. Dabei zeigt:
- Fig. 1: in einer Perspektivansicht ein Fahrpedal gemäß einem Ausführungsbeispiel,
- Fig. 2: in einer Seitenansicht ein Fahrpedal gemäß einem Ausführungsbeispiel,
- Fig. 3: in einer Seitenansicht ein Fahrpedal gemäß einem Ausführungsbeispiel, und
- Fig. 4: In einer Perspektivansicht ein Fahrpedal gemäß einem Ausführungsbeispiel.

Ähnliche, ähnlich wirkende, gleiche oder gleich wirkende Elemente sind in den Figuren mit ähnlichen oder gleichen Bezugszeichen versehen. Die Figuren sind lediglich schematisch und nicht maßstabsgetreu.

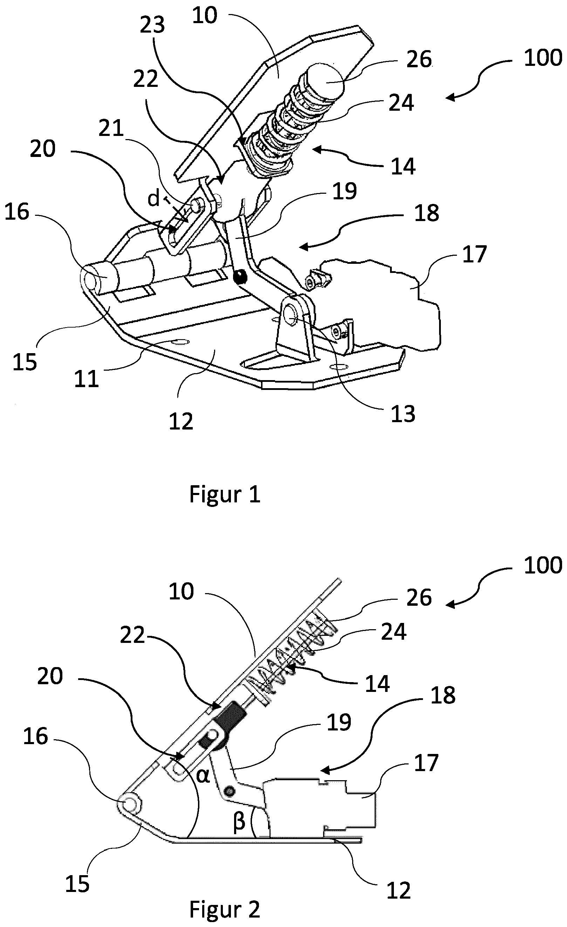

Fig. 1 zeigt in einer Perspektivansicht ein Fahrpedal gemäß einem Ausführungsbeispiel. Das Fahrpedal 100, welches vorzugsweise ein Gaspedal ist, weist eine Grundplatte 12, welche an der Karosserie des Kraftfahrzeugs angebracht werden kann und eine Pedalplatte 10, welche dazu konfiguriert ist, eine mechanische Kraft von einem Fahrer aufzunehmen und welche relativ zur Grundplatte 12 schwenkbar ist, auf. Vorzugsweise sind beide Platten, d. h., die Pedalplatte 10 und die Grundplatte 12 aus Blech ausgebildet. Dabei kann es sich um Blechteile handeln, welche jeweils einteilig ausgebildet sind. Alternativ kann zum Beispiel die Pedalplatte 10 einteilig ausgebildet sein und die Grundplatte 12 mehrteilig sein, oder umgekehrt. Das Fahrpedal 100 weist zudem zumindest ein Scharnier 16, worüber die Grundplatte 12 und die Pedalplatte 10 schwenkend miteinander gekoppelt sind, auf. Die Grundplatte 12 kann einen angehobenen Bereich 15 aufweisen. Der angehobene Bereich 15 kann dazu dienen, dass zumindest eine Scharnier 16 von der Karosserie des Kraftfahrzeugs zu beabstanden. Der angehobene Bereich 15 der Grundplatte 12 kann alternativ oder zusätzlich in vorteilhafter Weise das zumindest eine Scharnier 16 entlasten, denn durch den angehobenen Bereich 15 der Grundplatte 12 der Schwenkwinkel α der Pedalplatte 10 relativ zur Grundplatte 12 in der Tat größer ist als der tatsächliche Schwenkwinkel des zumindest einen Scharniers 16.

Das Fahrpedal 100 weist zudem eine Federeinheit 14, welche mit der Pedalplatte 10 gekoppelt ist, insbesondere über eine Koppelvorrichtung 23 und eine Einstelleinheit 20 gekoppelt ist. Die Federeinheit 14 erstreckt sich parallel oder im Wesentlichen parallel zur Pedalplatte 10, insbesondere zur Längserstreckung der Pedalplatte 10. Die Federeinheit 14 kann eine Führungsstange aufweisen, um welche zumindest ein Federpaket 24 angeordnet ist. Die Führungsstange kann durch eine Öffnung der Koppelvorrichtung 23 durchführen. Die Führungsstange kann zudem einen Federteller 26 aufweisen. Dabei können die Führungsstange und der Federteller 26 einteilig ausgebildet sein. Die Federeinheit 14 weist zudem ein Gelenkstück 22 auf. Dabei kann die Führungsstange in das Gelenkstück 22 münden. Das Gelenkstück 22 kann beispielsweise einen Gussteil, etwa aus Kunststoff oder aus Metall sein. Das Gelenkstück 22 kann daher an dem freien Ende der Führungsstange gegossen werden. Das Federpaket 24 der Federeinheit 14 kann um die Führungsstange herum angeordnet sein, wobei das Federpaket 24 zwischen dem Federteller 26 und der Koppelvorrichtung 23 angeordnet ist. Die Koppelvorrichtung 23 kann eine Stoßfläche oder eine Anlagefläche für das Federpaket 24 bilden.

Das Fahrpedal 100 weist eine Hebeleinheit 18 auf. Die Hebeleinheit 18 weist wiederum einen Hebelarm 19 und einen Sensor 17 auf. Die Hebeleinheit 18 und die Federeinheit 14 sind miteinander verbunden, insbesondere miteinander wirkverbunden. Zur Verbindung der zwei Einheiten kann das Gelenkstück 22 den Hebelarm 19 der Hebeleinheit 18 aufnehmen. Hierfür kann das Gelenkstück 22 eine Spalte aufweisen, welche vorzugsweise formschlüssig mit dem Hebelarm 19 ist. Das Ende des Hebelarms 19, welches im Gelenkstück 22 aufgenommen ist, ist mit einer Bohrung vorgesehen (in den Figuren nicht sichtbar). Durch die Bohrung des Hebelarms 19 kann der Einstellstift 21 führen.

Das Gelenkstück 22 kann über einen Einstellstift 21 und eine Einstelleinheit 20 mit der Pedalplatte 10 gekoppelt sein. Der Einstellstift 21 führt quer zur Längsachse der Federeinheit 14 durch das Gelenkstück 22 und zwar derart, dass der Hebelarm 19 im Gelenkstück 22, insbesondere in einem Spalt des Gelenkstücks 22 vom Einstellstift 21 aufgenommen ist.

Das dem Gegenstück entgegengesetzte Ende des Hebelarms 19 ist mit dem Sensor 17 der Hebeleinheit 18 gekoppelt, insbesondere über ein Sensorgelenk 13 gekoppelt. Der Sensor 17 der Hebeleinheit 18 ist vorzugsweise an der Grundplatte 12 des Fahrpedals 100 befestigt. Hierfür kann ein Biegeteil der Grundplatte 12 zur Bildung des Sensorgelenks 13 vorgesehen sein. Der Sensor 17 ist dazu ausgeführt, die mechanische Kraft, welche von der Pedalplatte 10 aufgenommen werden kann, in elektrische Kraft umzuwandeln. Die mechanische Kraft wird von der Pedalplatte 10 aufgenommen und über die Federeinheit 14, insbesondere das Federpaket 24 der Federeinheit 14 durch die Schwenkung der Pedalplatte 10 um einen Schwenkwinkel α relativ zur Grundplatte 12, und den Hebelarm 19 an den Sensor 17 übertragt. Eine Schwenkung um einen Schwenkwinkel α der Pedalplatte 10 hin zur Grundplatte 12 des Fahrpedals 100 impliziert eine Komprimierung des Federpakets 24 der Federeinheit 14. Dabei wird ebenfalls das Gelenkstück 22 bewegt, insbesondere entlang der Längserstreckung der Pedalplatte 10. Das Gelenkstück 22 kann mittels dem Einstellstift einer vorgegebenen Bewegung entlang der Längserstreckung der Pedalplatte 10 folgen. Hierfür kann der Einstellstift 21 in einer oder zwei Führungsschlitzen der Einstellvorrichtung 20 derart hineinragen, dass die Einstellvorrichtung 20 den Abstand d zwischen der Rückseite der Pedalplatte 10 und dem Gelenkstück 22 vorgibt.

Der Abstand d, welcher von der Einstellvorrichtung 20 vorgegeben oder eingestellt werden kann, kann derart eingestellt werden, dass das Gelenkstück 22 und die Pedalplatte 10 durchgehend (d. h., auch beim Betätigen des Fahrpedals) in Berührung stehen. Das Gelenkstück 22 kann demnach eine Reibfläche aufweisen. Die Größe der Reibfläche des Gelenkstücks 22 kann vom Abstand d, d. h., von der Ausführungsform der Einstellvorrichtung 20 abhängen. Beim Aufbringen einer mechanischen Kraft auf die Pedalplatte 10 wird sich das Gelenkstück 22 derart bewegen, dass der Einstellstift 21 sich in der, bzw. den Führungsschlitzen parallel oder im Wesentlich parallel zur Längserstreckung der Pedalplatte 10 und/oder der Federeinheit bewegt.

Beim Sensor 17 kann es sich um einen Drehwinkelsensor handeln. Der Drehwinkelsensor kann einen Einstellwinkel β des Hebelarms 19 der Hebeleinheit 18 ermitteln. Der Eistellwinkel β stellt den Winkel des Hebelarms 19 relativ zur Grundplatte 12 des Fahrpedals 100 an der Verbindungsstelle zwischen Hebelarm 19 und Sensor 17 dar (siehe Fig. 2).

Die Grundplatte 12 des Fahrpedals 100 kann zudem ein oder mehrere Befestigungslöcher 11 aufweisen. Mittels eines solchen Befestigungslochs 11 kann die Grundplatte direkt oder indirekt zur Karosserie des Kraftfahrzeugs befestigt werden.

Insgesamt kann das Ausführungsbeispiel der Fig. 1 den Vorteil haben, dass sowohl das Gelenkstück 22 als auch das Federpaket 24 außerhalb des Schmutzbereichs liegen und somit weniger störanfällig sind.

Fig. 2 zeigt eine Seitenansicht eines Fahrpedals 100 gemäß einem Ausführungsbeispiel. Sofern nicht anders beschrieben weist das Fahrpedal 100 der Fig. 2 dieselben Elemente und/oder Komponente wie das Fahrpedal 100 der Fig. 1 auf. Fig. 2 zeigt insbesondere das Fahrpedal 100 in einem Ruhezustand oder in einem ausgespannten Zustand. In Fig. 2 ist es nämlich ersichtlich, dass das zumindest eine Federpakt 24 der Federeinheit 14 ausgespannt ist. In dem Ruhezustand oder in dem ausgespannten Zustand kann sich das Fahrpedal 100 befinden, wenn gerade keine mechanische Kraft auf die Pedalplatte 10 aufgebracht wird.

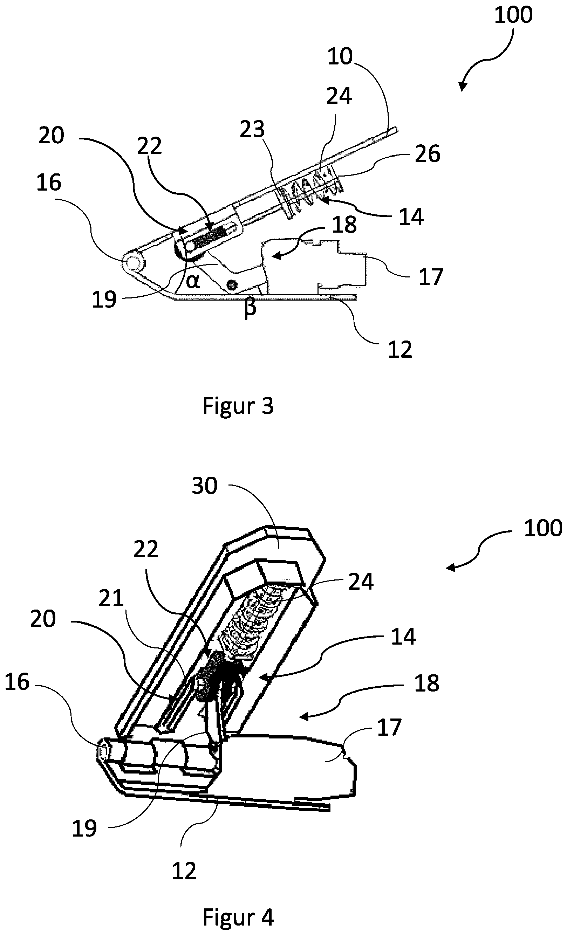

Fig. 3 zeigt eine Seitenansicht eines Fahrpedals 100 gemäß einem Ausführungsbeispiel. Sofern nicht anders beschrieben, weist das Fahrpedal 100 der Fig. 3 dieselben Elemente und/oder Komponente wie das Fahrpedal 100 der Fig. 1 und 2. In Fig. 3 ist das Fahrpedal 100 in einem betätigten Zustand. Dies ist dadurch ersichtlich, dass das Federpaket 24 der Federeinheit 14 zwischen dem Federteller 26 und der Koppeleinheit 23 komprimiert ist, bzw. komprimierter ist als in der Fig. 2. Dadurch wurde das Gelenkstück 22 der Federeinheit 14 parallel oder im Wesentlichen parallel zur Längserstreckung der Pedalplatte 10 in Richtung des zumindest einen Scharniers 16 bewegt. Die Bewegung des Gelenkstücks 22 kann mit der Einstellvorrichtung 20, insbesondere mit den Führungsschlitzen der Einstellvorrichtung 20, geführt werden. Die Einstellvorrichtung 20 weist vorzugsweise zwei Biegeteile der Pedalplatte 10 auf, welche jeweils mit einer solchen Führungsschlitze für einen Einstellstift 21 vorgesehen sind. Eine Transition von dem betätigten Zustand in dem Ruhezustand des Fahrpedals 100 oder umgekehrt kann demnach mit einer Komprimierung oder Entspannung (oder Ausspannung) des Federpakets 24 und mit einer parallel oder im Wesentlichen parallel zur Längserstreckung der Pedalplatte verlaufende Bewegung des Gelenkstücks 22 korrespondieren. Ausgehend vom Ruhezustand des Fahrpedals 100 in den betätigten Zustand des Fahrpedals 100 verkleinert sich der Schwenkwinkel α der Pedalplatte 10 relativ zur Grundplatte 12. Die Verkleinerung des Schwenkwinkels α korreliert mit einer Verkleinerung des Einstellwinkels β des Hebelarms 19 relativ zum Sensor 17. Um diese Korrelation zu realisieren, bzw. zu verdeutlichen, ist der Hebelarm 19 vorzugsweise geboten, insbesondere um einen Winkel von 30°, von 40° oder von 50° gebogen.

Ausgehend vom betätigten Zustand des Fahrpedals 100 zum Ruhezustand des Fahrpedals 100 kann das Gelenkstück 22 eine Gegenkraft gegen die Ausspannung, bzw. Entspannung des Federpakets 24 auswirken. Mit anderen Worten kann ein Hysterese-Effekt erzeugt werden. Hierfür weist das Gelenkstück 22 eine Reibfläche auf. Beim Aufnehmen der mechanischen Kraft mittels der Pedalplatte 10 wird das Gelenkstück 22 der Federeinheit 14 derart an der Pedalplatte 10, insbesondere an der Rückseite der Pedalplatte 10 gerieben, dass das Gelenkstück 22 eine Gegenkraft gegen das Entspannen des Federpakets 24 der Federeinheit bewirkt.

Zusammengefasst wirkt beim Betätigen des Fahrpedals eine vorbestimmte Reibung in einer Sollposition, sodass die entsprechende Pedalstellung ohne großen Kraftaufwand in Position gehalten werden kann.

Fig. 4 zeigt eine Perspektivansicht eines Fahrpedals 100 gemäß einem Ausführungsbeispiel. Sofern nicht anders beschrieben, weist das Fahrpedal 100 der Fig. 4 dieselben Elemente und/oder Komponente wie das Fahrpedal 100 der Fig. 1 bis 3.

Das Fahrpedal 100 der Fig. 4 weist zudem einen Pedalschutz 30 auf. Der Pedalschutz 30 ist dazu eingerichtet zumindest eine Vorderseite der Pedalplatte 10 zu bedecken. Der Pedalschutz 30 kann zudem dazu eingerichtet sein, die wichtigen mechanischen Bauteile des Fahrpedals, d. h., die Federeinheit 14 zumindest abschnittsweise zu schützen. Der Pedalschutz 30 kann von den Seiten her die Federeinheit 14 abschirmen oder schützen. Der Pedalschutz 30 umfasst vorzugsweise Kunststoff. Der Pedalschutz 30 kann dazu dienen die Haptik der Pedalplatte für den Fahrer zu verbessern. Der Pedalschutz 30 kann zudem dazu dienen das Fahrpedal 100 weniger Anfällig gegen Schmutz, Staub oder Ähnliches zu gestalten.

Der Pedalschutz 30 kann austauschbar mit der Pedalplatte 10 gekoppelt sein. Insbesondere kann der Pedalschutz 30 auf oder an die Pedalplatte geschlüpft werden.

Ergänzend sei darauf hingewiesen, dass die Begriffe "umfassend" und "aufweisend" keine anderen Elemente ausschließen und die unbestimmten Artikel "eine" oder "ein" keine Vielzahl ausschließen. Ferner sei darauf hingewiesen, dass Merkmale und Schritte, die mit Verweis auf eines der obigen Ausführungsbeispiele beschrieben worden sind, auch in Kombination mit anderen Merkmalen und Schritten anderer oben beschriebener Ausführungsbeispiele verwendet werden können. Bezugszeichen in den Ansprüchen sind nicht als Einschränkungen anzusehen.

### Bezugszeichenliste

- 100: Fahrpedal
- 10: Pedalplatte
- 11: Befestigungsloch
- 12: Grundplatte
- 13: Sensorgelenk
- 14: Federeinheit
- 15: angehobener Bereich
- 16: Scharnier
- 17: Sensor
- 18: Hebeleinheit
- 19: Hebelarm
- 20: Einstellvorrichtung
- 21: Einstellstift
- 22: Gelenkstück
- 23: Koppeleinheit
- 24: Federpaket
- 26: Federteller
- 30: Pedalschutz

## Patentansprüche

1. Fahrpedal (100) für ein Kraftfahrzeug, aufweisend
eine Grundplatte (12), welche an der Karosserie des Kraftfahrzeugs anbringbar ist,
eine Pedalplatte (10), welche dazu konfiguriert ist, eine mechanische Kraft von einem Fahrer aufzunehmen und welche relativ zur Grundplatte (12) schwenkbar ist,
zumindest ein Scharnier (16), worüber die Grundplatte (12) und die Pedalplatte (10) schwenkend miteinander gekoppelt sind,
eine Federeinheit (14), welche mit der Pedalplatte (10) gekoppelt ist und sich parallel oder im Wesentlichen parallel zur Pedalplatte (10) erstreckt, und
eine mit der Federeinheit (14) gekoppelte Hebeleinheit (18), aufweisend einen Hebelarm (19) und einen Sensor (17),
wobei die mechanische Kraft über die Federeinheit (14) und den Hebelarm (19) der Hebeleinheit (18) an den Sensor (17) der Hebeleinheit (18) übertragbar ist, und
wobei der Sensor (17) dazu ausgeführt ist, die mechanische Kraft in elektrische Kraft umzuwandeln.

2. Fahrpedal (100) nach Anspruch 1,
**dadurch gekennzeichnet.**
**dass** die Pedalplatte (10) eine Koppeleinheit (23) und/oder eine Einstellvorrichtung (20) aufweist,
wobei die Koppeleinheit (23) und/oder die Einstellvorrichtung (20) dazu eingerichtet sind/ist die Federeinheit (14) mit der Pedalplatte (10) zu koppeln, insbesondere beweglich zu befestigen.

3. Fahrpedal (100) nach einem der Ansprüche 1 und 2,
**dadurch gekennzeichnet,**
**dass** die Federeinheit (14) zumindest ein Federpaket (24) aufweist, wobei das zumindest eine Federpaket (24) zur Aufnahme der mechanischen Kraft an einer/der Koppelvorrichtung (23) der Pedalplatte (10) komprimierbar ist.

4. Fahrpedal (100) nach einem der voranstehenden Ansprüche,
**dadurch gekennzeichnet,**
**dass** die Federeinheit (14) ein Gelenkstück (22) aufweist, welches dazu eingerichtet ist die Federeinheit (14) mit der Hebeleinheit (18) zu koppeln, insbesondere den Hebelarm (19) der Hebeleinheit (18) mittels eines Einstellstifts (21) der Federeinheit (14) aufzunehmen.

5. Fahrpedal (100) nach Anspruch 4,
**dadurch gekennzeichnet,**
**dass** das Gelenkstück (22) der Federeinheit (14) eine Reibfläche aufweist, welche im Kontakt mit einer Rückseite der Pedalplatte (10) steht.

6. Fahrpedal (100) nach einem der voranstehenden Ansprüche,
**dadurch gekennzeichnet,**
**dass** die Pedalplatte (10) und/oder die Grundplatte (12) Blech umfasst, insbesondere aus Blech gefertigt ist.

7. Fahrpedal (100) nach einem der voranstehenden Ansprüche,
wobei der Hebelarm (19) der Hebeleinheit (18) gebogen ist und unter Ausbildung eines variablen Einstellwinkels (β) mit dem Sensor (17) der Hebeleinheit (18) gekoppelt ist.

8. Fahrpedal (100) nach einem der voranstehenden Ansprüche,
**dadurch gekennzeichnet,**
**dass** der Sensor (17) der Hebeleinheit (18) ein Drehwinkelsensor ist, welcher dazu eingerichtet ist einen/den Einstellwinkel (β) des Hebelarms (19) der Hebeleinheit (18) zu ermitteln, wobei der Einstellwinkel (β) des Hebelarms (19) insbesondere mit der mechanischen Kraft und/oder mit einem Schwenkwinkel (α) der Pedalplatte (10) korreliert.

9. Fahrpedal (100) nach einem der voranstehenden Ansprüche,
**dadurch gekennzeichnet,**
**dass** ein Pedalschutz (30) vorgesehen ist, welcher dazu eingerichtet ist, zumindest eine Vorderseite der Pedalplatte (10) zu bedecken.

10. Verfahren zum Betreiben eines Fahrpedals (100) für ein Kraftfahrzeug nach einem der Ansprüche 1 bis 9, aufweisend folgende Schritte:
• Aufnehmen einer mechanischen Kraft mittels der Pedalplatte (10) über eine Schwenkung der Pedalplatte (10) relativ zur Grundplatte (12),
• Übertragen der mechanischen Kraft über die Federeinheit (14) und den Hebelarm (19) der Hebeleinheit (18) an den Sensor (17) der Hebeleinheit (18),
wobei die übertragene mechanische Kraft mittels des Sensors (17) in elektrische Kraft umgewandelt wird.

11. Verfahren nach Anspruch 10,
**dadurch gekennzeichnet,**
**dass** zum Übertragen der mechanischen Kraft an den Sensor (17) ein Federpaket (24) der Federeinheit (14) durch die Schwenkung der Pedalplatte (10) relativ zur Grundplatte (12) komprimiert wird und eine zu einer Längserstreckung der Pedalplatte (10) parallelverlaufende oder im Wesentlichen parallelverlaufende Bewegung eines Gelenkstückes (22) der Federeinheit (14) durch das Komprimieren verursacht wird.

12. Verfahren nach Anspruch 11,
**dadurch gekennzeichnet,**
**dass** zum Übertragen der mechanischen Kraft an den Sensor (17), durch die zu der Längserstreckung der Pedalplatte (10) parallelverlaufende oder im Wesentlichen parallelverlaufende Bewegung des Gelenkstückes (22) eine Schwenkung des Hebelarms (19) der Hebeleinheit (18) relativ zum Sensor (17) der Hebeleinheit (18) impliziert wird, und
**dass** der entsprechende Schwenkwinkel (β) der Schwenkung des Hebelarms (19) mittels des Sensors (17) ermittelt wird.

13. Verfahren nach einem der Ansprüche 10 bis 12,
**dadurch gekennzeichnet,**
**dass** beim Aufnehmen der mechanischen Kraft mittels der Pedalplatte (10) ein Gelenkstück (22) der Federeinheit (14) an der Pedalplatte (10), insbesondere an einer Rückseite der Pedalplatte (10), derart gerieben wird, dass das Gelenkstück (22) eine Gegenkraft gegen das Entspannen des Federpakets (24) der Federeinheit (14) bewirkt.

14. Kraftfahrzeug, insbesondere für den Agrikulturbereich und/oder Konstruktionsbereich, aufweisend ein Fahrpedal (100) nach einem der Ansprüche 1 bis 9.
